# EUROPEAN PATENT SPECIFICATION

(11) **EP 3 858 058 B1**
(45) Date of publication and mention of the grant of the patent: **29.11.2023**
(21) Application number: 19783757.8
(22) Date of filing: 27.09.2019
(51) Int. Cl.: H04W 72/566, H04W 72/23, H04W 72/56

(54) **RADIO NETWORK NODES, USER EQUIPMENT (UE) AND METHODS PERFORMED IN A WIRELESS COMMUNICATION NETWORK**
FUNKNETZWERKKNOTEN, BENUTZERGERÄT (UE) UND IN EINEM DRAHTLOSKOMMUNIKATIONSNETZWERK DURCHGEFÜHRTE VERFAHREN
NOEUDS DE RÉSEAU RADIO, ÉQUIPEMENT UTILISATEUR (UE) ET PROCÉDÉS RÉALISÉS DANS UN RÉSEAU DE COMMUNICATION SANS FIL

(30) Priority: 27.09.2018 US 201862737139 P
(43) Date of publication of application: 04.08.2021
(73) Proprietor: Telefonaktiebolaget LM Ericsson (publ), 164 83 Stockholm (SE)
(72) Inventor: DUDDA, Torsten, 41849 Wassenberg (DE); ALABBASI, Abdulrahman, 164 44 Kista (SE); ZOU, Zhenhua, 171 42 Solna (SE); ENBUSKE, Henrik, 113 41 Stockholm (SE); FRÖBERG OLSSON, Jonas, 590 74 Ljungsbro (SE); SCHLIWA-BERTLING, Paul, 590 71 Ljungsbro (SE)
(74) Representative: Ericsson
(86) International application number: PCT/SE2019/050933
(87) International publication number: WO 2020/067986

(56) References cited:
- MEDIATEK INC: "On UL Multiplexing for URLLC", 3GPP DRAFT; R1-1806813 ON UL MULTIPLEXING FOR URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, South Korea; 20180521 - 20180525 12 May 2018 (2018-05-12), XP051462783, Retrieved from the Internet: URL:http://www.3gpp.org/ftp/tsg%5Fran/WG1% 5FRL1/TSGR1%5F93/Docs [retrieved on 2018-05-12]
- NOKIA ET AL: "Prioritization between dynamic grant and configured grant", 3GPP DRAFT; R2-1800586 PRIORITIZATION BETWEEN DYNAMIC GRANT AND CONFIGURED GRANT, 3RD GENERATION PARTNERSHIP PROJECT (3GPP), MOBILE COMPETENCE CENTRE ; 650, ROUTE DES LUCIOLES ; F-06921 SOPHIA-ANTIPOL , vol. RAN WG2, no. Vancouver, Canada; 20180122 - 20180126 12 January 2018 (2018-01-12), XP051386236, Retrieved from the Internet: URL:http://www.3gpp.org/ftp/tsg%5Fran/WG2% 5FRL2/TSGR2%5FAHs/2018%5F01%5FNR/Docs/ [retrieved on 2018-01-12]

## Description

### TECHNICAL FIELD

Embodiments herein relate to a radio network node, a user equipment (UE) and methods performed therein regarding wireless communication. Furthermore, a computer program product and a computer-readable storage medium are also provided herein. Especially, embodiments herein relate to handling or enabling communication, e.g. establishment of UL transmissions, between the radio network node and the UE in a wireless communication network.

### BACKGROUND

In a typical wireless communication network, UEs, also known as wireless communication devices, mobile stations, stations (STA) and/or wireless devices, communicate via a Radio access Network (RAN) to one or more core networks (CN). The RAN covers a geographical area which is divided into service areas or cell areas, with each service area or cell area being served by network node such as an access node e.g. a Wi-Fi access point or a radio base station (RBS), which in some radio access technologies (RAT) may also be called, for example, a NodeB, an evolved NodeB (eNodeB) and a gNodeB (gNB). The service area or cell area is a geographical area where radio coverage is provided by the radio network node. The radio network node operates on radio frequencies to communicate over an air interface with the wireless devices within range of the access node. The radio network node communicates over a downlink (DL) to the wireless device and the wireless device communicates over an uplink (UL) to the access node.

A Universal Mobile Telecommunications System (UMTS) is a third generation telecommunication network, which evolved from the second generation (2G) Global System for Mobile Communications (GSM). The UMTS terrestrial radio access network (UTRAN) is essentially a RAN using wideband code division multiple access (WCDMA) and/or High-Speed Packet Access (HSPA) for communication with user equipments. In a forum known as the Third Generation Partnership Project (3GPP), telecommunications suppliers propose and agree upon standards for present and future generation networks and UTRAN specifically, and investigate enhanced data rate and radio capacity. In some RANs, e.g. as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. The RNCs are typically connected to one or more core networks.

Specifications for the Evolved Packet System (EPS) have been completed within the 3^{rd} Generation Partnership Project (3GPP) and this work continues in the coming 3GPP releases, such as 4G and 5G networks. The EPS comprises the Evolved Universal Terrestrial Radio Access Network (E-UTRAN), also known as the Long-Term Evolution (LTE) radio access network, and the Evolved Packet Core (EPC), also known as System Architecture Evolution (SAE) core network. E-UTRAN/LTE is a 3GPP radio access technology wherein the radio network nodes are directly connected to the EPC core network. As such, the Radio Access Network (RAN) of an EPS has an essentially "flat" architecture comprising radio network nodes connected directly to one or more core networks.

With the emerging 5G technologies also known as new radio NR, the use of very many transmit- and receive-antenna elements is of great interest as it makes it possible to utilize beamforming, such as transmit-side and receive-side beamforming. Transmit-side beamforming means that the transmitter can amplify the transmitted signals in a selected direction or directions, while suppressing the transmitted signals in other directions. Similarly, on the receive-side, a receiver can amplify signals from a selected direction or directions, while suppressing unwanted signals from other directions.

Beamforming allows the signal to be stronger for an individual connection. On the transmit-side this may be achieved by a concentration of the transmitted power in the desired direction(s), and on the receive-side this may be achieved by an increased receiver sensitivity in the desired direction(s). This beamforming enhances throughput and coverage of the connection. It also allows reducing the interference from unwanted signals, thereby enabling several simultaneous transmissions over multiple individual connections using the same resources in the time-frequency grid, so-called multi-user Multiple Input Multiple Output (MIMO).

In a newly defined 3GPP study item (RP-182090, Revised SID: Study on NR Industrial Internet of Things (IoT)), NR technology enhancements are studied with the target of providing more deterministic low-latency delivery of data.

UL traffic can be scheduled with dynamic UL grants or configured UL grants. In case of dynamic grants, the gNB provides an UL grant to the UE for each UL transmission. Configured grants are pre-allocated, i.e. provided once to the UE, thereafter the configured UL grant is valid for usage for UL transmissions according to a configured periodicity. The UE does not need to transmit padding on those UL resources if no UL data is available for transmission, i.e. may skip an UL transmission on such grants.

A typical NR-loT device would handle communication for multiple service types, e.g. periodic Ultra-reliable low latency communication (URLLC) type robot control messages, URLLC type of occasional alarm signals, for which periodic resources would need to be configured, occasional sensor data transmission, other mobile broadband (MBB) type traffic such as occasional video transmissions or software updates. It would lead to a traffic mix to be multiplexed by the UE for UL transmissions, i.e. on media access control (MAC) multiple logical channels with different priorities would need to be configured.

Periodic URLLC traffic must be delivered within a deterministic latency, i.e. robust transmissions must be guaranteed which is costly in terms of resource usage. On the other hand, sensor/M BB type of traffic must be served as well, for which resources should be used as efficient as possible, i.e. less robust. It is currently unclear how UE multiplexing of both traffic types with their different requirements can be efficiently handled in the NR system.

In particular, according to current standards, for example dynamic UL grants, e.g. less robust and large for MBB, or other UL grants, override configured UL grants, e.g. very robust for URLLC transmissions, either destroying the determinism for the URLLC transmissions or leading to a high complexity for the gNB to avoid those overriding, i.e. by scheduling "around" the configured UL grants, which in some resource situations may not be feasible. This may thus result in a reduced or limited performance of the wireless communication network.

Document "On UL Multiplexing for URLLC", R1-1806813, XP051462783, 12 May 2018, by MEDIATEK INC, relates to uplink multiplexing for URLLC.

### SUMMARY

An object of embodiments herein is to provide a mechanism that improves the performance in the wireless communication network.

The reader is referred to the appended independent claims. Some preferred features are laid out in the dependent claims.

It is herein disclosed a method executed at the UE, the method may comprise that the UE prioritizes UL transmission of the configured periodic UL grant over UL transmission of a dynamic UL grant under the condition that there is UL data to be transmitted on the configured grant according to a logical channel prioritization procedure. The configured periodic UL grant may e.g. be for a first type of transmissions such as URLLC transmission, and the dynamic UL grant may be for a second type of transmissions such as MBB transmission. In the method outlined herein, a transmission on a configured grant is prioritized over a dynamic UL grant transmission under the condition that there is UL data to be transmitted on the configured grant according to the logical channel prioritization procedure. Example: frequent robust configured grant may be allocated for the case that occasional URLLC data can be transmitted when available. With the method the radio network node may schedule anyway large (non-robust) dynamic UL grant for purpose of e.g. MBB traffic, without interrupting (mandating less robust) potential URLLC transmissions. Thus the first type of UL transmissions is not interrupted and thus this will lead to an improved performance of the wireless communication network in an efficient manner.

### BRIEF DESCRIPTION OF THE DRAWINGS

Embodiments will now be described in more detail in relation to the enclosed drawings, in which:
- Fig. 1: is a schematic overview depicting a wireless communication network according to embodiments herein;
- Fig. 2a: is a combined signalling scheme and flowchart according to embodiments herein;
- Fig. 2b: is a flowchart depicting a method performed by a user equipment according to embodiments herein;
- Fig. 2c: is a flowchart depicting a method performed by a radio network node according to embodiments herein;
- Fig. 3: is a block diagram depicting a UE according to embodiments herein;
- Fig. 4: is a block diagram depicting a radio network node according to embodiments herein;
- Fig. 5: schematically illustrates a telecommunication network connected via an intermediate network to a host computer;
- Fig. 6: is a generalized block diagram of a host computer communicating via a base station with a user equipment over a partially wireless connection; and
- Figs. 7-10: are flowcharts illustrating methods implemented in a communication system including a host computer, a base station and a user equipment.

### DETAILED DESCRIPTION

Embodiments herein may be described within the context of 3GPP NR radio technology (3GPP TS 38.300 V15.2.0 (2018-06)). It is understood, that the problems and solutions described herein are equally applicable to wireless access networks and userequipments (UEs) implementing other access technologies and standards. NR is used as an example technology where embodiments are suitable, and using NR in the description therefore is particularly useful for understanding the problem and solutions solving the problem. In particular, embodiments are applicable also to 3GPP LTE, or 3GPP LTE and NR integration, also denoted as non-standalone NR.

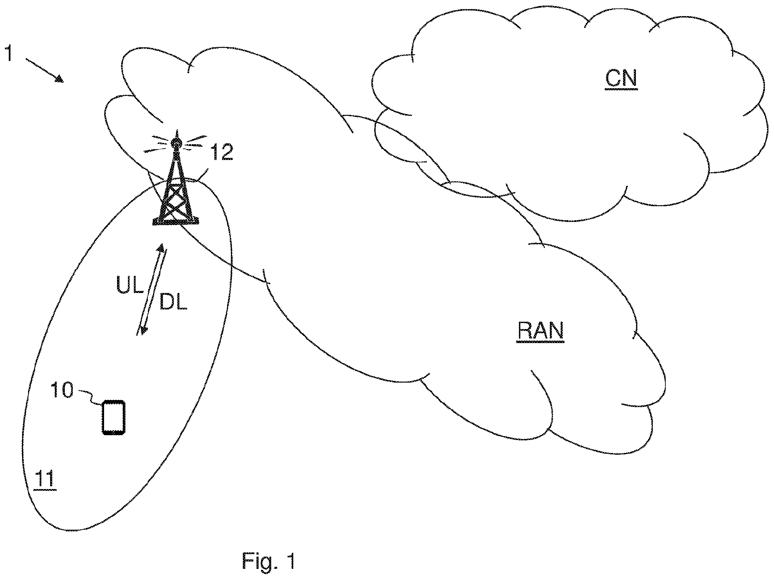

Embodiments herein relate to wireless communication networks in general. Fig. 1 is a schematic overview depicting **a wireless communication network 1.** The wireless communication network 1 comprises one or more RANs and one or more CNs. The wireless communication network 1 may use one or a number of different technologies, such as Wi-Fi, Long Term Evolution (LTE), LTE-Advanced, Fifth Generation (5G), Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations. Embodiments herein relate to recent technology trends that are of particular interest in a 5G context, however, embodiments are also applicable in further development of the existing wireless communication systems such as e.g. WCDMA and LTE.

In the wireless communication network 1, wireless devices e.g. **a UE 10** such as a mobile station, a non-access point (non-AP) STA, a STA, a user equipment and/or a wireless terminal, communicate via one or more Access Networks (AN), e.g. RAN, to one or more core networks (CN). It should be understood by the skilled in the art that "UE" is a non-limiting term which means any terminal, wireless communication terminal, user equipment, Machine Type Communication (MTC) device, Device to Device (D2D) terminal, or node e.g. smart phone, laptop, mobile phone, sensor, relay, mobile tablets or even a small base station capable of communicating using radio communication with a network node within an area served by the network node.

The wireless communication network 1 comprises **a radio network node 12** providing radio coverage over a geographical area, **a first service area 11,** of a radio access technology (RAT), such as LTE, Wi-Fi, WiMAX or similar. The radio network node 12 may be a transmission and reception point e.g. a radio network node such as a Wireless Local Area Network (WLAN) access point or an Access Point Station (AP STA), an access node, an access controller, a base station, e.g. a radio base station such as a NodeB, an evolved Node B (eNB, eNode B), a gNodeB (gNB), a base transceiver station, a radio remote unit, an Access Point Base Station, a base station router, a transmission arrangement of a radio base station, a stand-alone access point or any other network unit or node capable of communicating with a UE within the area served by the first network node 12 depending e.g. on the radio access technology and terminology used. The radio network node 12 may alternatively or additionally be a controller node or a packet processing node such as a radio controller node or similar. The radio network node 12 may be referred to as a serving network node wherein the first cell may be referred to as a serving cell, and the serving network node communicates with the UE 10 in form of DL transmissions to the UE 10 and UL transmissions from the UE 10.

It should be noted that a service area may be denoted as cell, beam, beam group or similar to define an area of radio coverage. The radio network node 12 may transmit reference signals (RS), such as cell specific reference signals (CRS), over respective service area. Hence, the radio network node 12 may transmit reference signals for mobility purposes of UEs, such as CRS or beam reference signals (BRS), repeatedly, in time, in a large number of different directions using as many transmission (Tx)-beams as deemed necessary to cover an operational area of the respective radio network node. Hence the radio network node 12 provides radio coverage over the first service area using a first reference signal, e.g. first CRS, for identifying the first service area 11 in the wireless communication network.

According to embodiments herein the radio network node 12 configures the UE 10 with a configured periodic grant, also referred to as configured UL grant, and receive a dynamic grant for UL transmissions. The decision on whether the dynamic or the configured periodic grant is used for an UL transmission by the UE may e.g. be conditional on:
- whether UL data has been obtained to transmit on the configured grant UL resources according to a logical channel prioritization procedure;
   ∘ e.g. in particular whether a MAC protocol data unit (PDU) is obtainable from the MAC multiplexing/assembly entity; and
   ∘ e.g. whether the uplink grant is skipped due to no data available on logical channels allowed to transmit on the configured UL grant.

It is assumed that according to a logical channel restriction condition, which is configurable, data transmission of some logical channels is not permitted on a configured UL grant, i.e. for the MBB type non-critical logical channels. This way, valuable robust resources are not wasted by sending MBB type traffic that does not require robust resources, but could rather wait/be delayed some time more and be transmitted on more efficient, less robust dynamically scheduled resources.

More specifically, according to embodiments herein, for a configured UL grant (with wanted frequent and robust but small allocation intended for reliably transmitted data such as URLLC data):
- the UE 10 may prioritize a received UL dynamic grant for a new transmission, received on physical downlink control channel (PDCCH) for cell radio network temporary identifier (C-RNTI), e.g. a larger grant with efficient (less robust) transmission parameters, under the condition that there would be no UL transmission on the configured grant, previously received configured grant on PDCCH for configured scheduling (CS)-RNTI, in case it was prioritized, i.e. that no UL data is available for transmission on a configured grant, i.e. for URLLC type logical channel for which transmission on the configured grant is allowed, that there is no UL data available. Note that according to current standard, the received dynamic UL grant would always be prioritized, independently of UL data availability.
- the UE 10 may prioritize the UL configured grant when there is UL data available for transmission on the UL configured grant for any logical channel for which transmission on the UL configured grant is permitted according to configured logical channel restrictions. E.g. URLLC logical channel (LCH) data.
   ∘ Additionally or alternatively, the UL configured grant may only be prioritized if according to the above condition(s) AND when for a logical channel transmission is ONLY permitted on the configured grant, i.e. this logical channel data had otherwise no possibility to be transmitted when dynamic grant were prioritized.

Note that requested retransmissions may always be prioritized. That is, additionally or alternatively, the retransmission of a MAC PDU sent on a previous configured grant may be prioritized over a later configured grant. In more detail, if the dynamic UL grant is for a retransmission of the configured grant, i.e., scrambled with CS-RNTI and a New Data Indicator (NDI) in the received hybrid automatic repeat request (HARQ) information is 1, this dynamic grant overrides the configured UL grant, irrespective of whether a MAC PDU has obtained or not.

In another embodiment, when prioritizing the UL configured grant according to the above, the following exception is considered:
Do not prioritize the UL configured grant if an LCH which is restricted to be transmitted only over the dynamic grant, is of higher priority than another LCH, for which restriction to transmit only on configured UL grant is configured.

In one embodiment, the radio network node 12 may expect transmission on either dynamic UL grant or configured UL grant, i.e. blindly decoding both possibilities.

The UE 10 may use configured periodic UL grant even if dynamic UL grant is received for overlapping resources, under the condition that UL data would be transmitted on the configured periodic UL grant resources according to the logical channel prioritization procedure.

Note that in a general scenario the term "radio network node" can be substituted with "transmission point". Distinction between the transmission points (TPs) may typically be based on CRSs or different synchronization signals transmitted. Several TPs may be logically connected to the same radio network node but if they are geographically separated, or are pointing in different propagation directions, the TPs may be subject to the same mobility issues as different radio network nodes. In subsequent sections, the terms "radio network node" and "TP" can be thought of as interchangeable.

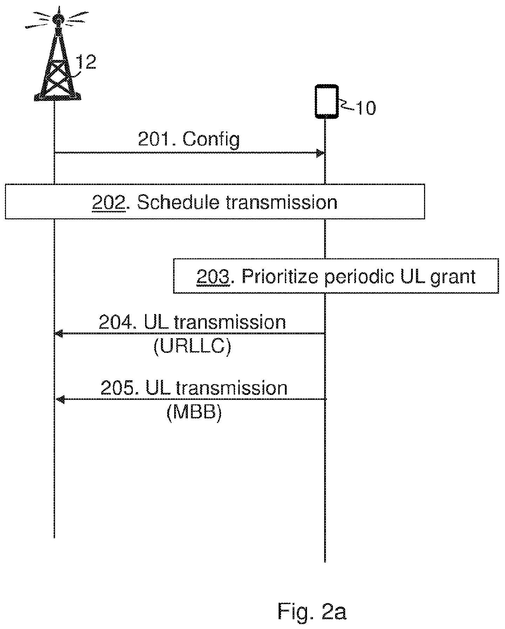

**Fig. 2a** is a combined flowchart and signalling scheme according to embodiments herein. The actions may be performed in any suitable order.

### Action 201.

The radio network node 12 may configure the UE to prioritize UL transmission of configured periodic UL grant over UL transmission of a dynamic UL grant under a condition that there is UL data to be transmitted on the configured grant according to a logical channel prioritization procedure. The configured periodic UL grant may be for a first type of transmissions e.g. critical data transmissions such as URLLC transmissions, and the dynamic UL grant may be for a second type of transmissions e.g. non-critical data transmissions such as MBB transmissions.

### Action 202.

The radio network node 12 may schedule the UE 10 with a dynamic grant for UL transmissions of the second type e.g. non-critical data transmissions such as non-latency sensitive transmissions e.g. for a broadband service or similar. This may mean that the radio network node transmits a dynamic UL grant to the UE 10. The UE 10 may thus send a scheduling request for an UL transmission and may subsequently receive a dynamic UL grant for the UL transmission.

### Action 203.

The UE 10 prioritizes UL transmission of the configured periodic UL grant over UL transmission of the dynamic UL grant under the condition that there is UL data to be transmitted on the configured periodic UL grant according to a logical channel prioritization procedure. The configured periodic UL grant may be for the first type of transmissions such as URLLC transmission, and the dynamic UL grant may be for the second type of transmissions such as MBB transmission.

### Action 204.

When the UE 10 has prioritized periodic UL grant in action 203, the UE may transmit a transmission of the first type of transmissions such as URLLC transmission.

### Action 205.

When the UE 10 has prioritized dynamic UL grant in action 203, the UE may transmit a transmission of the second type of transmissions such as MBB transmission.

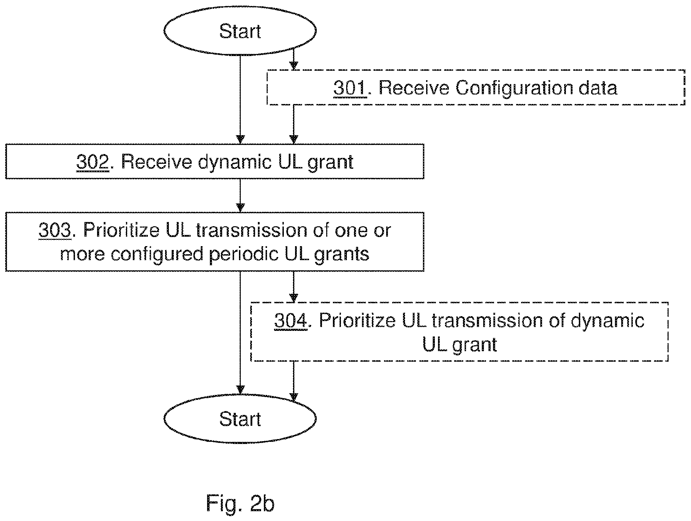

The method actions performed by the UE 10 for communicating in the wireless communication network according to embodiments herein will now be described with reference to a flowchart depicted in **Fig. 2b****.** The actions do not have to be taken in the order stated below, but may be taken in any suitable order. Actions performed in some embodiments are marked with dashed boxes.

The UE is configured with one or more periodic UL grants indicating one or more UL resources to use for one or more UL transmissions.

**Action 301.** The UE 10 may receive configuration data from the radio network node 12 for configuring the UE 10 to prioritize the UL transmission of the configured periodic UL grant.

**Action 302.** The UE 10 receives the dynamic UL grant for an UL transmission.

**Action 303.** The UE 10 prioritizes an UL transmission of the one or more configured periodic UL grants over an UL transmission of the dynamic UL grant under a condition that there is UL data to be transmitted on the one or more configured periodic UL grants according to a logical channel prioritization procedure. The one or more configured periodic UL grants may be for a first type of transmissions e.g. URLLC data transmissions, and the dynamic UL grant may be for a second type of transmissions e.g. MBB transmissions. The logical channel prioritization procedure may comprise one or more of the following: data is available on a logical channel for the first type of transmissions; a logical channel transmission is only permitted for the first type of transmissions; when there is UL data available for transmission on the one or more configured periodic UL grants for any logical channel for which transmission on the one or more configured periodic UL grants is permitted according to a configured logical channel restriction. The UE 10 may further prioritize the UL transmission of the configured periodic UL grant in case the UL transmission is a retransmission of a medium access control (MAC) Protocol data unit (PDU) sent on a previous configured grant over an UL transmission of a later configured grant. The logical channel prioritization procedure may also be referred to as logical channel restriction indicating restriction for using one or more logical channels.

**Action 304.** The UE 10 may further prioritize an UL transmission of the dynamic UL grant over an UL transmission of the one or more configured periodic UL grants under a condition that: logical channel, which is restricted to be transmitted only over the dynamic grant, is of a higher priority than another logical channel, which is restricted to be transmitted only over the one or more configured periodic UL grants. Or the UE 10 further prioritizes an UL transmission of the dynamic UL grant over an UL transmission of the one or more configured periodic UL grants under a condition that: UL transmission of the one or more configured periodic UL grants is skipped due to no data available on logical channels allowed to transmit on the one or more configured periodic UL grants. E.g. the UE 10 may prioritize the UL configured grant when there is UL data available for transmission on the UL configured grant for any logical channel for which transmission on the UL configured grant is permitted according to configured logical channel restrictions. E.g. URLLC logical channel (LCH) data. Alternatively, the configured periodic UL grant may be prioritized if logical channel data is ONLY permitted on configured grant AND if logical channel data ONLY permitted on dynamic UL grant has lower priority than logical channel ONLY permitted on configured periodic UL grant. Thus, the first type of UL transmissions is not interrupted and thus this will lead to an improved performance of the wireless communication network in an efficient manner.

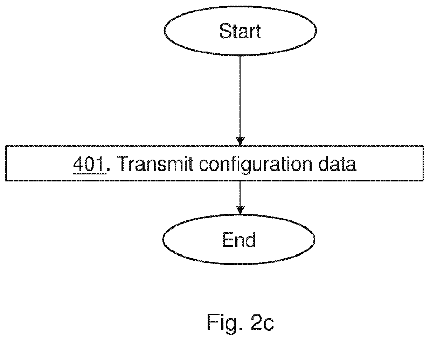

The method actions performed by the radio network node 12 for handling a configuration of the UE 10 in the wireless communication network according to embodiments herein will now be described with reference to a flowchart depicted in **Fig. 2c****.** The actions do not have to be taken in the order stated below, but may be taken in any suitable order. Actions performed in some embodiments are marked with dashed boxes.

**Action 401.** The radio network node 12 transmits the configuration data to the UE 10 to configure the UE 10 to prioritize an UL transmission of the one or more configured periodic UL grants over an UL transmission of the dynamic UL grant under a condition that there is UL data to be transmitted on the one or more configured periodic UL grants according to a logical channel prioritization procedure. The one or more configured periodic UL grants may be for a first type of transmissions, and the dynamic UL grant may be for a second type of transmissions. The logical channel prioritization procedure may comprise one or more of the following: data is available on a logical channel for the first type of transmissions; a logical channel transmission is only permitted for the first type of transmissions; when there is UL data available for transmission on the one or more configured periodic UL grants for any logical channel for which transmission on the one or more configured periodic UL grants is permitted according to a configured logical channel restriction. The configuration data may further configure the UE 10 to prioritize an UL transmission of the dynamic UL grant over an UL transmission of the one or more configured periodic UL grants under a condition that: logical channel, which is restricted to be transmitted only over the dynamic grant, is of a higher priority than another logical channel, which is restricted to be transmitted only over the one or more configured periodic UL grants; or that UL transmission of the one or more configured periodic UL grants is skipped due to no data available on logical channels allowed to transmit on the one or more configured periodic UL grants.

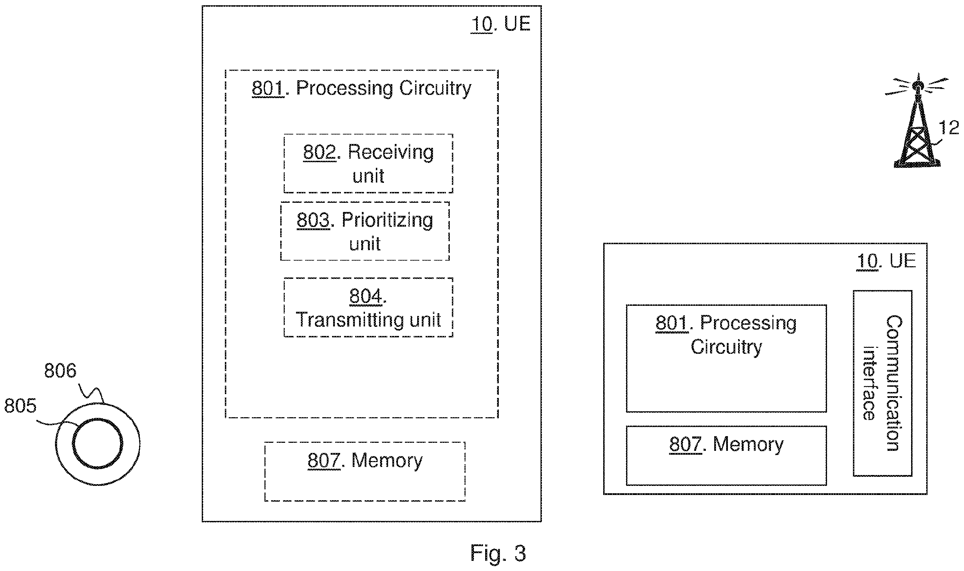

**Fig. 3** is a block diagram depicting the UE 10 for communicating in the wireless communication network e.g. for handling configuration such as handling or enabling communication to the radio network node in the wireless communication network 1 according to embodiments herein. The UE 10 is configured with one or more periodic UL grants indicating one or more UL resources to use for one or more UL transmissions.

The UE 10 may comprise **processing circuitry 801,** e.g. one or more processors, configured to perform the methods herein.

The UE 10 may comprise **a receiving unit 802,** e.g. a receiver or a transceiver. The UE 10, the processing circuitry 801, and/or the receiving unit 802 is configured to receive the dynamic UL grant for the UL transmission. The UE 10, the processing circuitry 801, and/or the receiving unit 802 may further be configured to receive configuration data from the radio network node 12. The configuration data may define that the UE prioritizes UL transmission of the configured periodic UL grant over UL transmission of a dynamic UL grant under the condition that there is UL data to be transmitted on the configured grant according to a logical channel prioritization procedure. The configured periodic UL grant may be for a first type of transmissions such as URLLC transmission, and the dynamic UL grant may be for a second type of transmissions such as MBB transmission. The UE 10, the processing circuitry 801, and/or the receiving unit 802 is configured to receive a dynamic UL grant for an UL transmission. The one or more configured periodic UL grants are for the first type of transmissions, and the dynamic UL grant is for the second type of transmissions. The UE 10, the processing circuitry 801, and/or the receiving unit 802 may further be configured to receive configuration data from the radio network node 12 for configuring the UE to prioritize the UL transmission of the configured periodic UL grant.

The UE 10 may comprise **a prioritizing unit 803.** The UE 10, the processing circuitry 801, and/or the prioritizing unit 803 is configured to prioritize the UL transmission of the one or more configured periodic UL grants over the UL transmission of the dynamic UL grant under the condition that there is UL data to be transmitted on the one or more configured periodic UL grants according to a logical channel prioritization procedure. The UE 10, the processing circuitry 801, and/or the prioritizing unit 803 may e.g. be configured to prioritize UL transmission of the configured periodic UL grant over UL transmission of the dynamic UL grant under the condition that there is UL data to be transmitted on the configured periodic UL grant according to the logical channel prioritization procedure. The logical channel prioritization procedure comprises one or more of the following: data is available on a logical channel for the first type of transmissions; a logical channel transmission is only permitted for the first type of transmissions; when there is UL data available for transmission on the one or more configured periodic UL grants for any logical channel for which transmission on the one or more configured periodic UL grants is permitted according to the configured logical channel restriction. The UE 10, the processing circuitry 801, and/or the prioritizing unit 803 may e.g. be configured to prioritize the UL transmission of the configured periodic UL grant in case the UL transmission is the retransmission of the MAC PDU sent on the previous configured grant over an UL transmission of a later configured grant. The UE 10, the processing circuitry 801, and/or the prioritizing unit 803 may e.g. be configured to prioritize the UL transmission of the dynamic UL grant over an UL transmission of the one or more configured periodic UL grants under the condition that: logical channel, which is restricted to be transmitted only over the dynamic grant, is of a higher priority than another logical channel, which is restricted to be transmitted only over the one or more configured periodic UL grants; or that UL transmission of the one or more configured periodic UL grants is skipped due to no data available on logical channels allowed to transmit on the one or more configured periodic UL grants.

The UE 10 may comprise **a transmitting unit 804,** e.g. a transmitter or a transceiver. The UE 10, the processing circuitry 801, and/or the transmitting unit 804 may be configured to prioritize UL transmission of the configured periodic UL grant over UL transmission of the dynamic UL grant under the condition that there is UL data to be transmitted on the configured periodic UL grant according to a logical channel prioritization procedure. In some examples, the prioritizing unit 803 performs the prioritization. Therefore, in these examples, the UE 10, the processing circuitry 801, and/or the transmitting unit 804 may be configured to transmit transmission of the first type or transmission of the second type as prioritized by the UE 10, the processing circuitry 801, and/or the prioritizing unit 803.

The UE 10 further comprises **a memory 807.** The memory comprises one or more units to be used to store data on, such as RSs, strengths or qualities, UL grants, indications, requests, commands, applications to perform the methods disclosed herein when being executed, and similar. The UE 10 comprises a communication interface comprising one or more antennas.

The methods according to the embodiments described herein for the UE 10 are respectively implemented by means of e.g. **a computer program product 805** or a computer program, comprising instructions, i.e., software code portions, which, when executed on at least one processor, cause the at least one processor to carry out the actions described herein, as performed by the UE 10. The computer program product 805 may be stored on **a computer-readable storage medium 806,** e.g. a universal serial bus (USB) stick, a disc or similar. The computer-readable storage medium 806, having stored thereon the computer program product, may comprise the instructions which, when executed on at least one processor, cause the at least one processor to carry out the actions described herein, as performed by the UE 10. In some embodiments, the computer-readable storage medium may be a non-transitory or a transitory computer-readable storage medium.

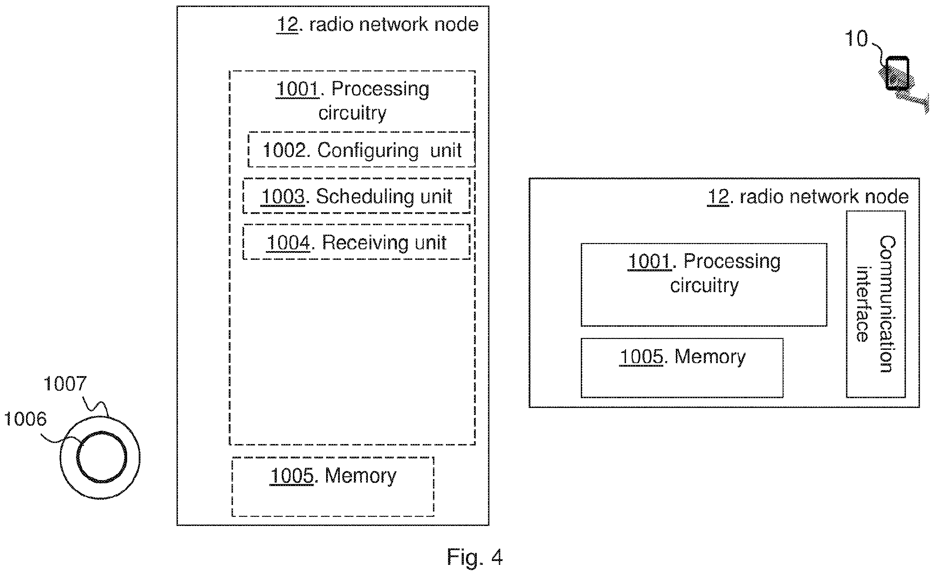

**Fig. 4** is a block diagram depicting the radio network node 12 for handling, e.g. facilitating, the configuration in the wireless communication network 1 according to embodiments herein.

The radio network node 12 may comprise **processing circuitry 1001,** e.g. one or more processors, configured to perform the methods herein.

The radio network node 12 may comprise **a configuring unit 1002.** The radio network node 12, the processing circuitry 1001 and/or the configuring unit 1002 may be configured to configure the UE 10 with an UL grant for UL transmission over a logic channel. The radio network node 12, the processing circuitry 1001 and/or the configuring unit 1002 is configured to transmit configuration data to the UE 10 to configure the UE 10 to prioritize the UL transmission of one or more configured periodic UL grants over the UL transmission of the dynamic UL grant under the condition that there is UL data to be transmitted on the one or more configured periodic UL grants according to a logical channel prioritization procedure. The one or more configured periodic UL grants may be for the first type of transmissions, and the dynamic UL grant is for the second type of transmissions. The logical channel prioritization procedure may comprise one or more of the following: data is available on the logical channel for the first type of transmissions; the logical channel transmission is only permitted for the first type of transmissions; when there is UL data available for transmission on the one or more configured periodic UL grants for any logical channel for which transmission on the one or more configured periodic UL grants is permitted according to a configured logical channel restriction. The configuration data may further configure the UE 10 to prioritize an UL transmission of the dynamic UL grant over an UL transmission of the one or more configured periodic UL grants under a condition that: logical channel, which is restricted to be transmitted only over the dynamic grant, is of a higher priority than another logical channel, which is restricted to be transmitted only over the one or more configured periodic UL grants; or that UL transmission of the one or more configured periodic UL grants is skipped due to no data available on logical channels allowed to transmit on the one or more configured periodic UL grants.The radio network node 12 may comprise **a scheduling unit 1003,** such as a scheduler. The radio network node 12, the processing circuitry 1001 and/or the scheduling unit 1003 may further be configured to schedule the UE 10 with a dynamic grant for UL transmission of a broadband service or similar.

The radio network node 12 may comprise a **receiving unit 1004,** e.g. a receiver or transceiver. The radio network node 12, the processing circuitry 1001 and/or the receiving module 1004 is configured to receive from the UE 10 data on the radio resource.

The radio network node 12 further comprises a **memory 1005.** The memory comprises one or more units to be used to store data on, such as strengths or qualities, grants, scheduling information, applications to perform the methods disclosed herein when being executed, and similar. The radio network node 12 comprises a communication interface comprising transmitter, receiver, transceiver and/or one or more antennas.

The methods according to the embodiments described herein for radio network node 12 are respectively implemented by means of e.g. a **computer program product 1006** or a computer program product, comprising instructions, i.e., software code portions, which, when executed on at least one processor, cause the at least one processor to carry out the actions described herein, as performed by the first radio network node 12. The computer program product 1006 may be stored on a **computer-readable storage medium 1007,** e.g. a USB stick, a disc or similar. The computer-readable storage medium 1007, having stored thereon the computer program product, may comprise the instructions which, when executed on at least one processor, cause the at least one processor to carry out the actions described herein, as performed by the radio network node 12. In some embodiments, the computer-readable storage medium may be a non-transitory or transitory computer-readable storage medium.

In some embodiments a more general term "radio network node" is used and it can correspond to any type of radio network node or any network node, which communicates with a wireless device and/or with another network node. Examples of network nodes are NodeB, Master eNB, Secondary eNB, a network node belonging to Master cell group (MCG) or Secondary Cell Group (SCG), base station (BS), multi-standard radio (MSR) radio node such as MSR BS, eNodeB, network controller, radio network controller (RNC), base station controller (BSC), relay, donor node controlling relay, base transceiver station (BTS), access point (AP), transmission points, transmission nodes, Remote Radio Unit (RRU), Remote Radio Head (RRH), nodes in distributed antenna system (DAS), core network node e.g. Mobility Switching Centre (MSC), Mobile Management Entity (MME) etc., Operation and Maintenance (O&M), Operation Support System (OSS), Self-Organizing Network (SON), positioning node e.g. Evolved Serving Mobile Location Centre (E-SMLC), Minimizing Drive Test (MDT) etc.

In some embodiments the non-limiting term wireless device or user equipment (UE) is used and it refers to any type of wireless device communicating with a network node and/or with another UE in a cellular or mobile communication system. Examples of UE are target device, device-to-device (D2D) UE, proximity capable UE (aka ProSe UE), machine type UE or UE capable of machine to machine (M2M) communication, PDA, PAD, Tablet, mobile terminals, smart phone, laptop embedded equipped (LEE), laptop mounted equipment (LME), USB dongles etc.

The embodiments are described for 5G. However the embodiments are applicable to any RAT or multi-RAT systems, where the UE receives and/or transmit signals (e.g. data) e.g. LTE, LTE FDD/TDD, WCDMA/HSPA, GSM/GERAN, Wi Fi, WLAN, CDMA2000 etc.

Measurement Reference Signal (MRS): As used herein, a "MRS" is any signal used for mobility measurements in Mobility measurement beams. Thus, while the term "MRS" is used herein to refer a signal used herein, the term "MRS" is to be construed broadly to mean any signal, regardless of what the signal is named, e.g., in any particular standard, used for mobility measurements and, in particular, used according to the embodiments described herein. In some embodiments, a MRS is a mobility specific signal that is used for handover/beam switching purposes. This reference signal can be periodic or aperiodic. It can be configured to be wireless device specific or could be used common for more than one wireless device.

As will be readily understood by those familiar with communications design, that functions means or modules may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a wireless device or network node, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware, read-only memory (ROM) for storing software, random-access memory for storing software and/or program or application data, and non-volatile memory. Other hardware, conventional and/or custom, may also be included. Designers of communications devices will appreciate the cost, performance, and maintenance trade-offs inherent in these design choices.

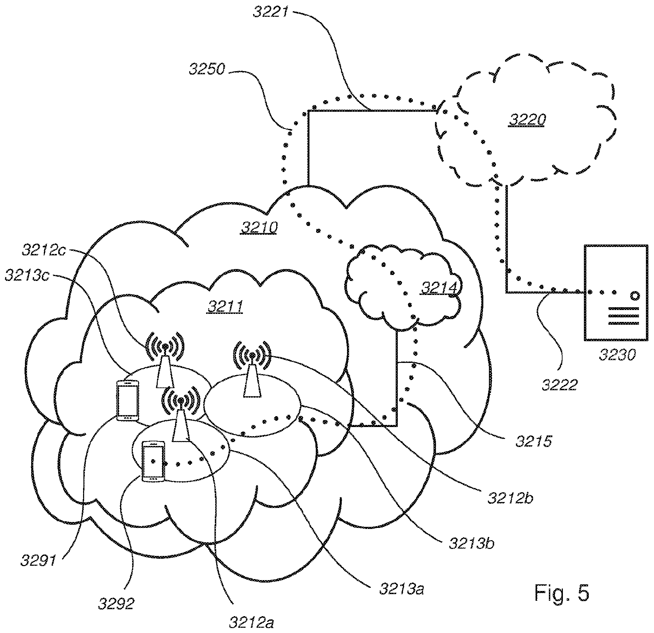

With reference to **Fig 5****,** in accordance with an embodiment, a communication system includes a telecommunication network 3210, such as a 3GPP-type cellular network, which comprises an access network 3211, such as a radio access network, and a core network 3214. The access network 3211 comprises a plurality of base stations 3212a, 3212b, 3212c, such as NBs, eNBs, gNBs or other types of wireless access points being examples of the radio network node 12 herein, each defining a corresponding coverage area 3213a, 3213b, 3213c. Each base station 3212a, 3212b, 3212c is connectable to the core network 3214 over a wired or wireless connection 3215. A first user equipment (UE) 3291, being an example of the UE 10, located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 5 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

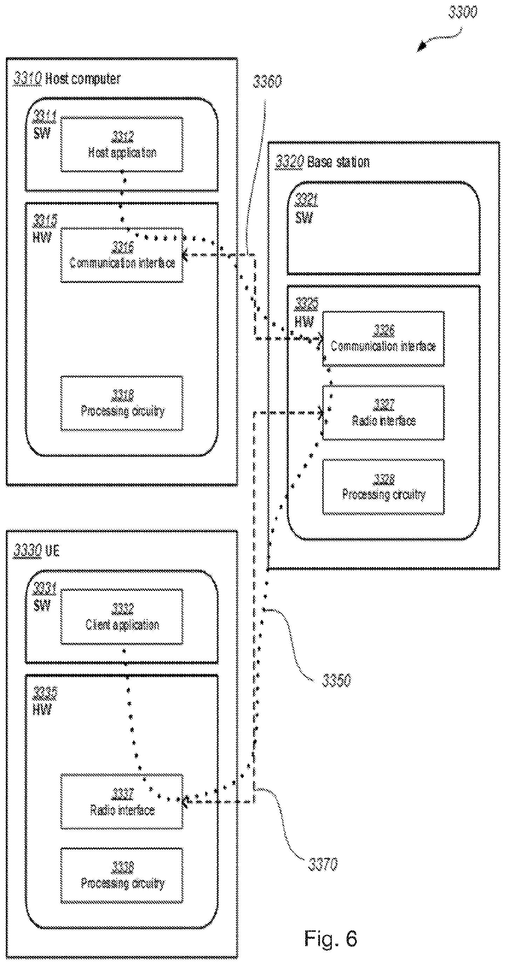

Example implementations, in accordance with an embodiment, of the UE, base station and host computer discussed in the preceding paragraphs will now be described with reference to **Fig. 6****.** In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Fig.6) served by the base station 3320. The communication interface 3326 may be configured to facilitate a connection 3360 to the host computer 3310. The connection 3360 may be direct or it may pass through a core network (not shown in Fig.6) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Fig.6 may be identical to the host computer 3230, one of the base stations 3212a, 3212b, 3212c and one of the UEs 3291, 3292 of Fig. 5, respectively. This is to say, the inner workings of these entities may be as shown in Fig.6 and independently, the surrounding network topology may be that of Fig. 5.

In Fig.6, the OTT connection 3350 has been drawn abstractly to illustrate the communication between the host computer 3310 and the user equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the performance since the first type of UL transmissions is not interrupted and thereby provide benefits such as reduced user waiting time, and better responsiveness.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

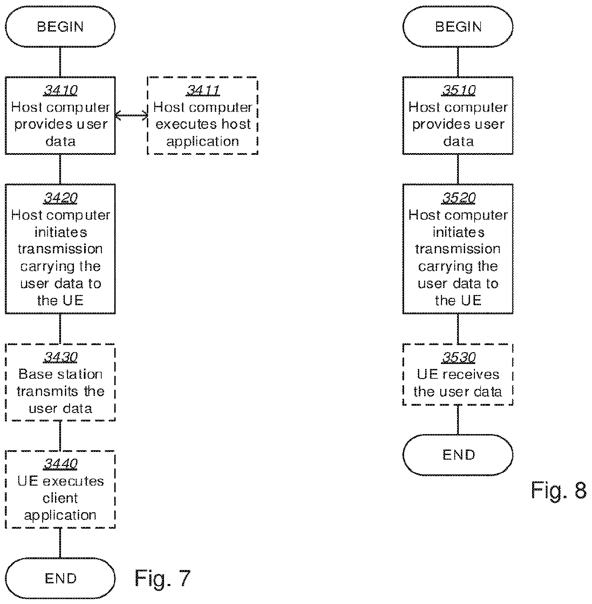

**Fig. 7** is a flowchart illustrating a method implemented in a communication system, in accordance with one embodiment. The communication system includes a host computer, a base station and a UE which may be those described with reference to Figures 5 and 6. For simplicity of the present disclosure, only drawing references to Figure 7 will be included in this section. In a first step 3410 of the method, the host computer provides user data. In an optional substep 3411 of the first step 3410, the host computer provides the user data by executing a host application. In a second step 3420, the host computer initiates a transmission carrying the user data to the UE. In an optional third step 3430, the base station transmits to the UE the user data which was carried in the transmission that the host computer initiated, in accordance with the teachings of the embodiments described throughout this disclosure. In an optional fourth step 3440, the UE executes a client application associated with the host application executed by the host computer.

**Fig. 8** is a flowchart illustrating a method implemented in a communication system, in accordance with one embodiment. The communication system includes a host computer, a base station and a UE which may be those described with reference to Figures 5 and 6. For simplicity of the present disclosure, only drawing references to Figure 8 will be included in this section. In a first step 3510 of the method, the host computer provides user data. In an optional substep (not shown) the host computer provides the user data by executing a host application. In a second step 3520, the host computer initiates a transmission carrying the user data to the UE. The transmission may pass via the base station, in accordance with the teachings of the embodiments described throughout this disclosure. In an optional third step 3530, the UE receives the user data carried in the transmission.

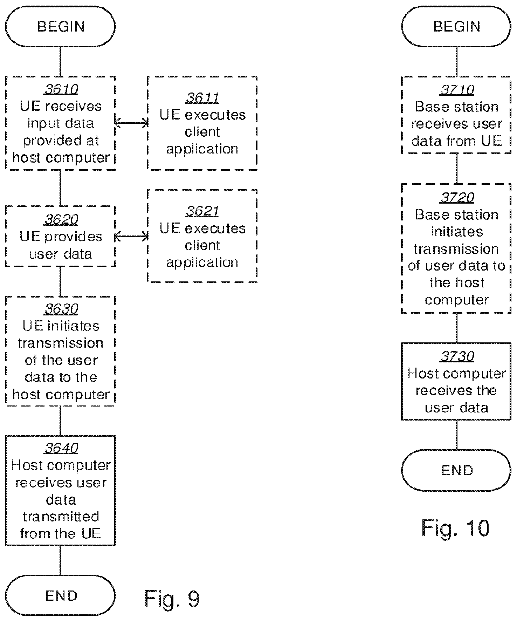

**Fig. 9** is a flowchart illustrating a method implemented in a communication system, in accordance with one embodiment. The communication system includes a host computer, a base station and a UE which may be those described with reference to Figures 5 and 6. For simplicity of the present disclosure, only drawing references to Figure 9 will be included in this section. In an optional first step 3610 of the method, the UE receives input data provided by the host computer. Additionally or alternatively, in an optional second step 3620, the UE provides user data. In an optional substep 3621 of the second step 3620, the UE provides the user data by executing a client application. In a further optional substep 3611 of the first step 3610, the UE executes a client application which provides the user data in reaction to the received input data provided by the host computer. In providing the user data, the executed client application may further consider user input received from the user. Regardless of the specific manner in which the user data was provided, the UE initiates, in an optional third substep 3630, transmission of the user data to the host computer. In a fourth step 3640 of the method, the host computer receives the user data transmitted from the UE, in accordance with the teachings of the embodiments described throughout this disclosure.

**Fig. 10** is a flowchart illustrating a method implemented in a communication system, in accordance with one embodiment. The communication system includes a host computer, a base station and a UE which may be those described with reference to Figures 5 and 6. For simplicity of the present disclosure, only drawing references to Figure 10 will be included in this section. In an optional first step 3710 of the method, in accordance with the teachings of the embodiments described throughout this disclosure, the base station receives user data from the UE. In an optional second step 3720, the base station initiates transmission of the received user data to the host computer. In a third step 3730, the host computer receives the user data carried in the transmission initiated by the base station.

### ABBREVIATIONS

- ACK: Acknowledged
- ADC: Analog-to-digital conversion
- AGC: Automatic gain control
- ANR: Automatic neighbour relations
- AP: Access point
- BCH: Broadcast channel
- BLER: Block error rate
- BRS: Beam Reference Signal
- BS: Base station
- BSC: Base station controller
- BTS: Base transceiver station
- CA: Carrier aggregation
- CC: Component carrier
- CG: Cell group
- CGI: Cell global identity
- CP: Cyclic prefix
- CPICH: Common pilot channel
- CQI: Channel Quality Indicator
- CSG: Closed subscriber group
- CSI-RS: Channel State Information Reference Signal
- DAS: Distributed antenna system
- DC: Dual connectivity
- DFT: Discrete Fourier Transform
- DL: Downlink
- DL-SCH: Downlink shared channel
- DRX: Discontinuous reception
- EARFCN: Evolved absolute radio frequency channel number
- ECGI: Evolved CGI
- eNB: eNodeB
- FDD: Frequency division duplex
- FFT: Fast Fourier transform
- HD-FDD: Half duplex FDD
- HO: Handover
- ID: Identity
- M2M: machine to machine
- MAC: Media access control
- MCG: Master cell group
- MDT: Minimization of drive tests
- MeNB: Master eNode B
- MIB: Master information block
- MME: Mobility management entity
- MRS: Mobility Reference Signal
- MRTD: Maximum receive timing difference
- MSR: Multi-standard radio
- NACK: Not acknowledged
- OFDM: Orthogonal frequency-division multiplexing
- RI: Rank Indicator
- SI: System Information
- PCC: Primary component carrier
- PCI: Physical cell identity
- PCell: Primary Cell
- PCG: Primary Cell Group
- PCH: Paging channel
- PDU: Protocol data unit
- PGW: Packet gateway
- PHICH: Physical HARQ indication channel
- PLMN: Public land mobile network
- PMI: Precoding Matrix Indicator
- PSCell: Primary SCell
- PSC: Primary serving cell
- PSS: Primary synchronization signal
- RAT: Radio access Technology
- RF: Radio frequency
- RLM: Radio link monitoring
- RNC: Radio network Controller
- RRC: Radio resource control
- RRH: Remote radio head
- RRU: Remote radio unit
- RSCP: Received signal code power
- RSRP: Reference Signal Received Power
- RSRQ: Reference Signal Received Quality
- RSSI: Received signal strength indication
- RSTD: Reference signal time difference
- RV: Redundancy version
- Rx: Receiver
- SCC: Secondary component carrier
- SCell: Secondary Cell
- SCG: Secondary Cell Group
- SeNB: Secondary eNode B
- SFN: System frame number
- SGW: Signalling gateway
- SI: System information
- SIB: System information block
- SIB1: System information block type 1
- SINR: Signal to interference and noise ratio
- SON: Self-organizing networks
- SSC: Secondary serving cell
- SSS: Secondary synchronization signal
- TA: Timing advance
- TAG: Timing advance group
- TDD: Time division duplex
- Tx: Transmitter
- UARFCN: UMTS Absolute Radio Frequency Channel Number
- UE: User equipment
- UL: Uplink

## Claims

1. A method performed by a user equipment, UE, for communicating in a wireless communication network, wherein the UE is configured with one or more periodic uplink, UL, grants indicating one or more UL resources to use for one or more UL transmissions, the method comprising
- *receiving* (302) a dynamic UL grant for an UL transmission;
- *prioritizing* (303) an UL transmission of the one or more configured periodic UL grants over an UL transmission of the dynamic UL grant under a condition that there is UL data to be transmitted on the one or more configured periodic UL grants according to a logical channel prioritization procedure; and prioritizing an UL transmission of the dynamic UL grant over an UL transmission of the one or more configured periodic UL grants under a condition that UL transmission of the one or more configured periodic UL grants is skipped due to no data available on logical channels allowed to transmit on the one or more configured periodic UL grants.

2. The method according to claim 1, wherein the one or more configured periodic UL grants are for a first type of transmissions, and the dynamic UL grant is for a second type of transmissions.

3. The method according to claim 2, wherein the logical channel prioritization procedure comprises one or more of the following:
data is available on a logical channel for the first type of transmissions;
a logical channel transmission is only permitted for the first type of transmissions; when there is UL data available for transmission on the one or more configured periodic UL grants for any logical channel for which transmission on the one or more configured periodic UL grants is permitted according to a configured logical channel restriction.

4. The method according to any of the claims 1-3, further *prioritizing* the UL transmission of the configured periodic UL grant in case the UL transmission is a retransmission of a medium access control, MAC, Protocol data unit, PDU, sent on a previous configured grant over an UL transmission of a later configured grant.

5. The method according to any of the claims 1-4, further comprising
- *receiving* (301) configuration data from a radio network node for configuring the UE (10) to prioritize the UL transmission of the configured periodic UL grant.

6. A method performed by a radio network node (12) for handling a configuration of a user equipment, UE, (10) in a wireless communication network, the method comprising:
- *transmitting* (401) configuration data to the UE (10) to configure the UE (10) to prioritize an UL transmission of one or more configured periodic UL grants over an UL transmission of a dynamic UL grant under a condition that there is UL data to be transmitted on the one or more configured periodic UL grants according to a logical channel prioritization procedure, wherein the configuration data further configures the UE (10) to prioritize an UL transmission of the dynamic UL grant over an UL transmission of the one or more configured periodic UL grants under a condition that UL transmission of the one or more configured periodic UL grants is skipped due to no data available on logical channels allowed to transmit on the one or more configured periodic UL grants.

7. The method according to claim 6, wherein the one or more configured periodic UL grants is for a first type of transmissions, and the dynamic UL grant is for a second type of transmissions.

8. The method according to claim 7, wherein the logical channel prioritization procedure comprises one or more of the following:
data is available on a logical channel for the first type of transmissions;
a logical channel transmission is only permitted for the first type of transmissions; when there is UL data available for transmission on the one or more configured periodic UL grants for any logical channel for which transmission on the one or more configured periodic UL grants is permitted according to a configured logical channel restriction.

9. A user equipment, UE, (10) for communicating in a wireless communication network, wherein the UE is configured with one or more periodic uplink, UL, grants indicating one or more UL resources to use for one or more UL transmissions, and wherein the UE (10) is further configured to receive a dynamic UL grant for an UL transmission; prioritize an UL transmission of the one or more configured periodic UL grants over an UL transmission of the dynamic UL grant under a condition that there is UL data to be transmitted on the one or more configured periodic UL grants according to a logical channel prioritization procedure; and prioritize an UL transmission of the dynamic UL grant over an UL transmission of the one or more configured periodic UL grants under a condition that UL transmission of the one or more configured periodic UL grants is skipped due to no data available on logical channels allowed to transmit on the one or more configured periodic UL grants.

10. The UE (10) according to claim 9, wherein the one or more configured periodic UL grants are for a first type of transmissions, and the dynamic UL grant is for a second type of transmissions.

11. The UE (10) according to claim 10, wherein the logical channel prioritization procedure comprises one or more of the following:
data is available on a logical channel for the first type of transmissions;
a logical channel transmission is only permitted for the first type of transmissions; when there is UL data available for transmission on the one or more configured periodic UL grants for any logical channel for which transmission on the one or more configured periodic UL grants is permitted according to a configured logical channel restriction.

12. A radio network node (12) for handling a configuration of a user equipment, UE, (10) in a wireless communication network, wherein the radio network node (12) is configured to transmit configuration data to the UE (10) to configure the UE (10) to prioritize an UL transmission of one or more configured periodic UL grants over an UL transmission of a dynamic UL grant under a condition that there is UL data to be transmitted on the one or more configured periodic UL grants according to a logical channel prioritization procedure wherein the configuration data further configures the UE (10) to prioritize an UL transmission of the dynamic UL grant over an UL transmission of the one or more configured periodic UL grants under a condition that UL transmission of the one or more configured periodic UL grants is skipped due to no data available on logical channels allowed to transmit on the one or more configured periodic UL grants.

13. The radio network node (12) according to claim 12, wherein the one or more configured periodic UL grants is for a first type of transmissions, and the dynamic UL grant is for a second type of transmissions.

14. A computer program product comprising instructions, which, when executed on at least one processor, cause the at least one processor to carry out a method according to any of the claims 6-8 or claims 1-5, as performed by the radio network node, or the UE, respectively.

15. A computer-readable storage medium, having stored thereon a computer program product comprising instructions which, when executed on at least one processor, cause the at least one processor to carry out a method according to any of the claims 6-8 or claims 1-5, as performed by the radio network node, or the UE, respectively.

## Patentansprüche

1. Verfahren, das von einer Benutzereinrichtung, UE, durchgeführt wird, zur Kommunikation in einem Drahtloskommunikationsnetzwerk, wobei die UE mit einer oder mehreren periodischen Uplink-,UL-,Freigaben konfiguriert ist, die eine oder mehrere UL-Ressourcen zur Verwendung für eine oder mehrere UL-Übertragungen anzeigen, und das Verfahren umfasst:
- Empfangen (302) einer dynamischen UL-Freigabe für eine UL-Übertragung;
- Priorisieren (303) einer UL-Übertragung der einen oder der mehreren konfigurierten periodischen UL-Freigaben gegenüber einer UL-Übertragung der dynamischen UL-Freigabe unter der Bedingung, dass es UL-Daten gibt, die auf der einen oder den mehreren konfigurierten periodischen UL-Freigaben übertragen werden sollen, gemäß einer Logikkanalpriorisierungsprozedur; und Priorisieren einer UL-Übertragung der dynamischen UL-Freigabe gegenüber einer UL-Übertragung der einen oder der mehreren konfigurierten periodischen UL-Freigaben unter der Bedingung, dass UL-Übertragung der einen oder der mehreren konfigurierten periodischen UL-Freigaben aufgrund dessen übersprungen wird, dass keine Daten auf Logikkanälen verfügbar sind, die auf der einen oder den mehreren konfigurierten periodischen UL-Freigaben übertragen werden dürfen.

2. Verfahren nach Anspruch 1, wobei die eine oder die mehreren konfigurierten periodischen UL-Freigaben für eine erste Art von Übertragungen sind und die dynamische UL-Freigabe für eine zweite Art von Übertragungen ist.

3. Verfahren nach Anspruch 2, wobei die Logikkanalpriorisierungsprozedur ferner eines oder mehreres von Folgendem umfasst:
Daten sind auf einem Logikkanal für die erste Art von Übertragung verfügbar;
eine Logikkanalübertragung wird nur für die erste Art von Übertragung zugelassen; wenn es UL-Daten gibt, die zur Übertragung auf der einen oder den mehreren konfigurierten periodischen UL-Freigaben für einen Logikkanal verfügbar sind, für den Übertragung auf der einen oder den mehreren konfigurierten periodischen UL-Freigaben gemäß einer konfigurierten Logikkanalbeschränkung zugelassen ist.

4. Verfahren nach einem der Ansprüche 1 bis 3, ferner Priorisieren der UL-Übertragung der konfigurierten periodischen UL-Freigabe, falls die UL-Übertragung eine Neuübertragung einer Medienzugriffsteuerungs-,MAC-,Protokolldateneinheit, PDU, ist, die auf einer vorherigen konfigurierten Freigabe gesendet wurde, gegenüber einer UL-Übertragung einer später konfigurierten Freigabe.

5. Verfahren nach einem der Ansprüche 1 bis 4, ferner umfassend:
- Empfangen (301) von Konfigurationsdaten von einem Funknetzwerkknoten zum Konfigurieren der UE (10) zum Priorisieren der UL-Übertragung der konfigurierten periodischen UL-Freigabe.

6. Verfahren, das von einem Funknetzwerkknoten (12) durchgeführt wird, zur Handhabung einer Konfiguration einer Benutzereinrichtung, UE, (10) in einem Drahtloskommunikationsnetzwerk, wobei das Verfahren umfasst:
- Übertragen (401) von Konfigurationsdaten an die UE (10), um die UE (10) so zu konfigurieren, dass sie eine UL-Übertragung einer oder mehrerer konfigurierter periodischer UL-Freigaben gegenüber einer UL-Übertragung der dynamischen UL-Freigabe unter der Bedingung, dass es UL-Daten gibt, die auf der einen oder den mehreren konfigurierten periodischen UL-Freigaben übertragen werden sollen, gemäß einer Logikkanalpriorisierungsprozedur priorisiert, wobei die Konfigurationsdaten die UE (10) ferner so konfigurieren, dass sie eine UL-Übertragung der dynamischen UL-Freigabe gegenüber einer UL-Übertragung der einen oder der mehreren konfigurierten periodischen UL-Freigaben unter der Bedingung priorisiert, dass UL-Übertragung der einen oder der mehreren konfigurierten periodischen UL-Freigaben aufgrund dessen übersprungen wird, dass keine Daten auf Logikkanälen verfügbar sind, die auf der einen oder den mehreren konfigurierten periodischen UL-Freigaben übertragen werden dürfen.

7. Verfahren nach Anspruch 6, wobei die eine oder die mehreren konfigurierten periodischen UL-Freigaben für eine erste Art von Übertragungen sind und die dynamische UL-Freigabe für eine zweite Art von Übertragungen ist.

8. Verfahren nach Anspruch 7, wobei die Logikkanalpriorisierungsprozedur ferner eines oder mehreres von Folgendem umfasst:
Daten sind auf einem Logikkanal für die erste Art von Übertragung verfügbar;
eine Logikkanalübertragung wird nur für die erste Art von Übertragung zugelassen; wenn es UL-Daten gibt, die zur Übertragung auf der einen oder den mehreren konfigurierten periodischen UL-Freigaben für einen Logikkanal verfügbar sind, für den Übertragung auf der einen oder den mehreren konfigurierten periodischen UL-Freigaben gemäß einer konfigurierten Logikkanalbeschränkung zugelassen ist.

9. Benutzereinrichtung, UE, (10) zum Kommunizieren in einem Drahtloskommunikationsnetzwerk, wobei die UE mit einer oder mehreren periodischen Uplink-,UL-,Freigaben konfiguriert ist, die eine oder mehrere UL-Ressourcen zur Verwendung für eine oder mehrere UL-Übertragungen anzeigen, und wobei die UE (10) ferner so konfiguriert ist, dass sie eine dynamische UL-Freigabe für eine UL-Übertragung empfängt; eine UL-Übertragung der einen oder der mehreren konfigurierten periodischen UL-Freigaben gegenüber einer UL-Übertragung der dynamischen UL-Freigabe unter der Bedingung, dass es UL-Daten gibt, die auf der einen oder den mehreren konfigurierten periodischen UL-Freigaben übertragen werden sollen, gemäß einer Logikkanalpriorisierungsprozedur priorisiert; und eine UL-Übertragung der dynamischen UL-Freigabe gegenüber einer UL-Übertragung der einen oder der mehreren konfigurierten periodischen UL-Freigaben unter der Bedingung priorisiert, dass UL-Übertragung der einen oder der mehreren konfigurierten periodischen UL-Freigaben aufgrund dessen übersprungen wird, dass keine Daten auf Logikkanälen verfügbar sind, die auf der einen oder den mehreren konfigurierten periodischen UL-Freigaben übertragen werden dürfen.

10. UE (10) nach Anspruch 9, wobei die eine oder die mehreren konfigurierten periodischen UL-Freigaben für eine erste Art von Übertragungen sind und die dynamische UL-Freigabe für eine zweite Art von Übertragungen ist.

11. UE (10) nach Anspruch 10, wobei die Logikkanalpriorisierungsprozedur ferner eines oder mehreres von Folgendem umfasst:
Daten sind auf einem Logikkanal für die erste Art von Übertragung verfügbar;
eine Logikkanalübertragung wird nur für die erste Art von Übertragung zugelassen; wenn es UL-Daten gibt, die zur Übertragung auf der einen oder den mehreren konfigurierten periodischen UL-Freigaben für einen Logikkanal verfügbar sind, für den Übertragung auf der einen oder den mehreren konfigurierten periodischen UL-Freigaben gemäß einer konfigurierten Logikkanalbeschränkung zugelassen ist.

12. Funknetzwerkknoten (12) zum Handhaben einer Konfiguration einer Benutzereinrichtung, UE, (10) in einem Drahtloskommunikationsnetzwerk, wobei der Funknetzwerkknoten (12) zum Übertragen von Konfigurationsdaten an die UE (10) konfiguriert ist, um die UE (10) so zu konfigurieren, dass sie eine UL-Übertragung einer oder mehrerer konfigurierter periodischer UL-Freigaben gegenüber einer UL-Übertragung der dynamischen UL-Freigabe unter der Bedingung, dass es UL-Daten gibt, die auf der einen oder den mehreren konfigurierten periodischen UL-Freigaben übertragen werden sollen, gemäß einer Logikkanalpriorisierungsprozedur priorisiert, wobei die Konfigurationsdaten die UE (10) ferner so konfigurieren, dass sie eine UL-Übertragung der dynamischen UL-Freigabe gegenüber einer UL-Übertragung der einen oder der mehreren konfigurierten periodischen UL-Freigaben unter der Bedingung priorisiert, dass UL-Übertragung der einen oder der mehreren konfigurierten periodischen UL-Freigaben aufgrund dessen übersprungen wird, dass keine Daten auf Logikkanälen verfügbar sind, die auf der einen oder den mehreren konfigurierten periodischen UL-Freigaben übertragen werden dürfen.

13. Funknetzwerkknoten (12) nach Anspruch 12, wobei die eine oder die mehreren konfigurierten periodischen UL-Freigaben für eine erste Art von Übertragungen sind und die dynamische UL-Freigabe für eine zweite Art von Übertragungen ist.

14. Computerprogrammprodukt, umfassend Anweisungen, die bei Ausführung auf mindestens einem Prozessor den mindestens einen Prozessor zum Durchführen eines Verfahrens nach einem der Ansprüche 6 bis 8 oder 1 bis 5 veranlassen, wie vom Funknetzwerkknoten bzw. der UE durchgeführt.

15. Computerlesbares Speichermedium mit einem darauf gespeicherten Computerprogrammprodukt, das Anweisungen umfasst, die bei Ausführung auf mindestens einem Prozessor den mindestens einen Prozessor zum Durchführen eines Verfahrens nach einem der Ansprüche 6 bis 8 oder 1 bis 5 veranlassen, wie vom Funknetzwerkknoten bzw. der UE durchgeführt.

## Revendications

1. Procédé réalisé par un équipement utilisateur, UE, pour communiquer dans un réseau de communication sans fil, dans lequel l'UE est configuré avec un ou plusieurs octrois de liaison montante, UL, périodiques indiquant une ou plusieurs ressources UL à utiliser pour une ou plusieurs transmissions UL, le procédé comprenant :
- la réception (302) d'un octroi UL dynamique pour une transmission UL ;
- la priorisation (303) d'une transmission UL des un ou plusieurs octrois UL périodiques configurés par rapport à une transmission UL de l'octroi UL dynamique à condition qu'il y ait des données UL à transmettre sur les un ou plusieurs octrois UL périodiques configurés selon une procédure de priorisation de canal logique ; et la priorisation d'une transmission UL de l'octroi UL dynamique par rapport à une transmission UL des un ou plusieurs octrois UL périodiques configurés à condition qu'une transmission UL des un ou plusieurs octrois UL périodiques configurés soit sautée en raison de l'absence de données disponibles sur des canaux logiques autorisés à transmettre sur les un ou plusieurs octrois UL périodiques configurés.

2. Procédé selon la revendication 1, dans lequel les un ou plusieurs octrois UL périodiques configurés sont pour un premier type de transmissions, et l'octroi UL dynamique est pour un deuxième type de transmissions.

3. Procédé selon la revendication 2, dans lequel la procédure de priorisation de canal logique comprend un ou plusieurs parmi ce qui suit :
des données sont disponibles sur un canal logique pour le premier type de transmissions ;
une transmission de canal logique est uniquement permise pour le premier type de transmissions lorsqu'il y a des données UL disponibles pour une transmission sur les un ou plusieurs octrois UL périodiques configurés pour tout canal logique pour lequel une transmission sur les un ou plusieurs octrois UL périodiques configurés est permise selon une restriction de canal logique configurée.

4. Procédé selon l'une quelconque des revendications 1 à 3, comprenant en outre la priorisation de la transmission UL de l'octroi UL périodique configuré dans un cas où la transmission UL est une retransmission d'une unité de données de protocole, PDU, de commande d'accès au support, MAC, envoyée sur un octroi configuré précédent par rapport à une transmission UL d'un octroi configuré ultérieur.

5. Procédé selon l'une quelconque des revendications 1 à 4, comprenant en outre :
- la réception (301) de données de configuration depuis un noeud de réseau radio pour la configuration de l'UE (10) pour prioriser la transmission UL de l'octroi UL périodique configuré.

6. Procédé réalisé par un noeud de réseau radio (12) pour gérer une configuration d'un équipement utilisateur, UE, (10) dans un réseau de communication sans fil, le procédé comprenant :
- la transmission (401) de données de configuration à l'UE (10) pour configurer l'UE (10) pour prioriser une transmission UL d'un ou plusieurs octrois UL périodiques configurés par rapport à une transmission UL d'un octroi UL dynamique à condition qu'il y ait des données UL à transmettre sur les un ou plusieurs octrois UL périodiques configurés selon une procédure de priorisation de canal logique, dans lequel les données de configuration configurent en outre l'UE (10) pour prioriser une transmission UL de l'octroi UL dynamique par rapport à une transmission UL des un ou plusieurs octrois UL périodiques configurés à condition qu'une transmission UL des un ou plusieurs octrois UL périodiques configurés soit sautée en raison de l'absence de données disponibles sur des canaux logiques autorisés à transmettre sur les un ou plusieurs octrois UL périodiques configurés.

7. Procédé selon la revendication 6, dans lequel les un ou plusieurs octrois UL périodiques configurés sont pour un premier type de transmissions, et l'octroi UL dynamique est pour un deuxième type de transmissions.

8. Procédé selon la revendication 7, dans lequel la procédure de priorisation de canal logique comprend un ou plusieurs parmi ce qui suit :
des données sont disponibles sur un canal logique pour le premier type de transmissions ;
une transmission de canal logique est uniquement permise pour le premier type de transmissions lorsqu'il y a des données UL disponibles pour une transmission sur les un ou plusieurs octrois UL périodiques configurés pour tout canal logique pour lequel une transmission sur les un ou plusieurs octrois UL périodiques configurés est permise selon une restriction de canal logique configurée.

9. Equipement utilisateur, UE, (10) pour communiquer dans un réseau de communication sans fil, dans lequel l'UE est configuré avec un ou plusieurs octrois de liaison montante, UL, périodiques indiquant une ou plusieurs ressources UL à utiliser pour une ou plusieurs transmissions UL, et dans lequel UE (10) est en outre configuré pour recevoir un octroi UL dynamique pour une transmission UL ; prioriser une transmission UL des un ou plusieurs octrois UL périodiques configurés par rapport à une transmission UL de l'octroi UL dynamique à condition qu'il y ait des données UL à transmettre sur les un ou plusieurs octrois UL périodiques configurés selon une procédure de priorisation de canal logique ; et prioriser une transmission UL de l'octroi UL dynamique par rapport à une transmission UL des un ou plusieurs octrois UL périodiques configurés à condition qu'une transmission UL des un ou plusieurs octrois UL périodiques configurés soit sautée en raison de l'absence de données disponibles sur des canaux logiques autorisés à transmettre sur les un ou plusieurs octrois UL périodiques configurés.

10. UE (10) selon la revendication 9, dans lequel les un ou plusieurs octrois UL périodiques configurés sont pour un premier type de transmissions, et l'octroi UL dynamique est pour un deuxième type de transmissions.

11. UE (10) selon la revendication 10, dans lequel la procédure de priorisation de canal logique comprend un ou plusieurs parmi ce qui suit :
des données sont disponibles sur un canal logique pour le premier type de transmissions ;
une transmission de canal logique est uniquement permise pour le premier type de transmissions lorsqu'il y a des données UL disponibles pour une transmission sur les un ou plusieurs octrois UL périodiques configurés pour tout canal logique pour lequel une transmission sur les un ou plusieurs octrois UL périodiques configurés est permise selon une restriction de canal logique configurée.

12. Noeud de réseau radio (12) pour gérer une configuration d'un équipement utilisateur, UE, (10) dans un réseau de communication sans fil, dans lequel le noeud de réseau radio (12) est configuré pour transmettre des données de configuration à l'UE (10) pour configurer l'UE (10) pour prioriser une transmission UL d'un ou plusieurs octrois UL périodiques configurés par rapport à une transmission UL d'un octroi UL dynamique à condition qu'il y ait des données UL à transmettre sur les un ou plusieurs octrois UL périodiques configurés selon une procédure de priorisation de canal logique, dans lequel les données de configuration configurent en outre l'UE (10) pour prioriser une transmission UL de l'octroi UL dynamique par rapport à une transmission UL des un ou plusieurs octrois UL périodiques configurés à condition qu'une transmission UL des un ou plusieurs octrois UL périodiques configurés soit sautée en raison de l'absence de données disponibles sur des canaux logiques autorisés à transmettre sur les un ou plusieurs octrois UL périodiques configurés.

13. Noeud de réseau radio (12) selon la revendication 12, dans lequel les un ou plusieurs octrois UL périodiques configurés sont pour un premier type de transmissions, et l'octroi UL dynamique est pour un deuxième type de transmissions.

14. Produit programme informatique comprenant des instructions qui, lorsqu'elles sont exécutées sur au moins un processeur, amènent l'au moins un processeur à effectuer un procédé selon l'une quelconque des revendications 6 à 8 ou des revendications 1 à 5, telles que réalisées respectivement par le noeud de réseau radio ou l'UE.

15. Support de stockage lisible par ordinateur sur lequel est stocké un produit programme informatique comprenant des instructions qui, lorsqu'elles sont exécutées sur au moins un processeur, amènent l'au moins un processeur à effectuer un procédé selon l'une quelconque des revendications 6 à 8 ou des revendications 1 à 5, telles que réalisées respectivement par le noeud de réseau radio ou l'UE.
